# EUROPÄISCHE PATENTSCHRIFT

(11) **EP 3 118 344 B1**
(45) Veröffentlichungstag und Bekanntmachung des Hinweises auf die Patenterteilung: **13.11.2019**
(21) Anmeldenummer: 16001469.2
(22) Anmeldetag: 01.07.2016
(51) Int. Cl.: C23C 2/06, C23C 2/26, F16B 37/00, F16B 33/00

(54) **VERFAHREN ZUM KORROSIONSGESCHÜTZTEN VERSCHLIESSEN EINES WERKSTÜCKS UND DAFÜR VORGESEHENES SCHLIESSTEIL**
METHOD FOR CLOSING A WORKPIECE TO PROTECT AGAINST CORROSION AND CLOSING PART FOR THE SAME
PROCÉDÉ DE FERMETURE PROTÉGÉ CONTRE LA CORROSION D'UNE PIÈCE ET GROUPE DE FERMETURE CORRESPONDANTE

(30) Priorität: 02.07.2015 DE 102015008620
(43) Veröffentlichungstag der Anmeldung: 18.01.2017
(73) Patentinhaber: Pöppe, Gunnar, 48480 Spelle-Venhaus (DE)
(72) Erfinder: Pöppe, Gunnar, 48480 Spelle-Venhaus (DE); Bloedorn, Hans-Georg, 26683 Saterland-Scharrel (DE)
(74) Vertreter: Wischmeyer, André

(56) Entgegenhaltungen:
- WO-A1-2009/048638
- WO-A2-2005/024249
- US-A- 2 409 858
- US-A1- 2012 009 045
- Langill T: "Is there a requirement in ASTM specifications to plug vent/drain holes after galvanizing?", Vent and Drain Hole Plugs, 13. April 2012 (2012-04-13), Seiten 1-2, XP055325673, American Galvanizers Association, Centennial, CO [US] Gefunden im Internet: URL:http://www.galvanizeit.org/education-a nd-resources/resources/technical-faq-dr-ga lv/vent-and-drain-hole-plugs [gefunden am 2016-12-02]

## Beschreibung

Die Erfindung betrifft ein Schließteil aus Zink oder einer Zinklegierung zum Einsetzen in eine Durchlassöffnung eines metallischen Werkstücks, welches insbesondere eine durch einen Verzinkungsvorgang korrosionsgeschützte Oberfläche aufweist. Das Schließteil ist ein im Wesentlichen zylindrischer Körper, welcher zumindest bereichsweise einen mit der Durchlassöffnung korrespondierenden Durchmesser aufweist. Das Zink-Schließteil ist wahlweise kraft- und/oder formschlüssig in die Durchlassöffnung einsetzbar.

Zum Aufbringen von Korrosionsschutzschichten auf den Umwelteinflüssen ausgesetzten metallischen Gegenständen wie Standsäulen o. dgl. komplexe Bauteile ist es seit langem bekannt, eine entsprechende Deckschicht durch Feuerverzinken zu erzeugen. Aus DE 30 34 516 C2 ist ein derartiges Verfahren zu entnehmen, wobei das ein Feuerverzinkungsbad verlassende Werkstück anschließend in einem Wirbelsinterbad weiterbearbeitet wird. Die Teile sind nach dieser Doppel-Beschichtung sofort einsetzbar und bedürfen keiner Nachbearbeitung.

Gemäß DE 30 46 590 C2 wird ein Verfahren zum Verschließen von an Bauteilen vorhandenen Senklöchern vorgeschlagen, wobei diese Senklöcher im Bereich von Maschinenteilen als nachteilige Sammelstellen für Schmutz wirksam sind. In diese Senklöcher können deshalb jeweilige Verschlussstopfen aus unterschiedlichen Materialien eingebracht werden. Vorgeschlagen sind Ausführungen von Verschlussstopfen aus Stahl, Aluminium oder Zink. In jedem Fall besteht dabei die Gefahr, dass im Bereich der Senklöcher und der Stopfenteile bei zwei unterschiedlichen aneinander liegenden Materialien später eine Korrosion eintritt und die Stopfenteile aus den Senklöchern ungewollt herausverlagert werden.

Bei einer Konstruktion gemäß DE 199 17 345 C2 werden ebenfalls Stopfen in eine Aufnahmeöffnung eingesetzt, wobei die Stopfen aus einem unedleren Material bestehen, so dass bei dessen Kontakt zum Verankerungselement eine gezielte Wirkung als Opferanode erreicht wird.

Gemäß DE 10 2010 029 213 A1 wird eine Montageschiene in Beton eingebettet, wobei diese mit einer Korrosionsschutzbeschichtung versehen wird und in jeweilige, ebenfalls beschichte Öffnungen später ein Stopfen einzubringen ist.

In DE 10 2009 040 961 A1 wird ein Verschließteil gezeigt, das in eine Durchlass- oder Entlüftungsöffnung eines Bauteils eingeschlagen werden muss. Die Wirksamkeit dieser Verschluss-Lösung ist darauf abgestellt, dass das mittels eines Hammers von Hand einzubringende Verschließteil zumindest teilweise aus "verformbarem" Zink besteht. Durch eine insbesondere konische Gestaltung soll ein fester Sitz dieses Verschließteils im Hohlraum erreicht werden. Es ist jedoch festzustellen, dass das mit unkontrollierbaren Kräften durchzuführende Einschlagen des Verschließteils in das Werkstück zu einer Verformung im Bereich des Werkstücks und/oder der Öffnung führen kann und damit - insbesondere bei dynamischen Belastungen des beschichteten Werkstücks - die langzeitige Lagefixierung des Stopfenteils nachteilig beeinflusst ist.

US 2012/0009045 A offenbart ein genietetes Befestigungselement, bei dem eine zylindrische Zinkniete in eine zylindrische Muffe eingepresst wird. Die Muffe ist an der Wandung mit hemmenden Ausstülpungen versehen, die die eingepresste Niete sichern.

Die Erfindung befasst sich mit dem Problem, ein Schließteil zum korrosionsgeschützten Verschließen einer werkstückseitigen Durchlassöffnung sowie ein Verfahren zu dessen Einsatz zu schaffen, wobei mit geringem technischem Aufwand bei einfachem Verbindungsaufbau die Verbindungsqualität verbessert wird und der Einsatz dieser optimierten Bauteilkombination deren Anwendung an dynamisch belastbaren Bauteilen mit erhöhter Langzeitstabilität ermöglicht.

Die Erfindung löst diese Aufgabe mit einem Schließteil mit den kennzeichnenden Merkmalen des Anspruchs 1 und einem Verfahren mit den kennzeichnenden Merkmalen des Anspruchs 9. Weitere vorteilhafte Ausgestaltungen des erfindungsgemäßen Verfahrens und des Schließteils ergeben sich aus den Ansprüchen 2 bis 8 bzw. 10 bis 18.

Ausgehend davon, dass eine weitgehende Abdichtung von funktionalen Durchgangsöffnungen an Werkstücken - insbesondere nach deren Beschichtung durch Verzinken - seit langem bekannt ist, soll der korrosionsgeschützte Verschluss der Durchlassöffnungen durch ein Schließteil der vorbezeichneten Art verbessert werden. Das erfindungsgemäße Schließteil zum Einsetzen in eine Durchlassöffnung eines metallischen Werkstücks ist wandungsseitig zumindest bereichsweise an der Mantelfläche der Durchlassöffnung anlegbar. Das Schließteil weist ein Sicherungselement auf, welches das Schließteil in einer Einbaulage hält. Das Sicherungselement ist am Ende eines Einpressvorgangs zwangsgeführt in eine Halteposition verlagerbar.

Es hat sich gezeigt, dass die als Serienteil bereitgestellten Schließteile mit variierbaren Durchmessern an die jeweilige Vorbearbeitung bzw. den Beschichtungszustand im Bereich der Durchlassöffnung angepasst werden können. Die erfindungsgemäß zu verwendenden Zink-Schließteile können wahlweise in eine mit einer verzinkten Decklage versehene oder in eine durch Nachbearbeitung freigelegtes Grundmaterial aufweisende Durchlassöffnung optimal so eingepresst werden, dass der beabsichtigte dynamisch belastbare Bauteilverbund zwangsläufig erreicht wird.

Diese verbesserte Belastbarkeit der Verbindungsbaugruppe wird bereits dann erreicht, wenn das Zink-Schließteil mit seiner zylindrischen Mantelfläche zumindest bereichsweise an einer durch die Nachbearbeitung von der verzinkten Decklage freien Wandung der Durchlassöffnung angelegt wird. Eine weitere Optimierung sieht vor, dass das Schließteil ausgehend vom zylindrischen Basiskörper auch mit einem Kopfteil versehen sein kann. Dieser über den Durchmesser der Durchlassöffnung überstehend bemessene Kopfteil kann als zusätzliches axiales Sicherungselement wirksam sein. Vorzugsweise ist vorgesehen, dass der Kopfteil in Form eines mit dem Basiskörper einstückigen Kegelstumpfes geformt ist. Dieser Kegelstumpf ist im Bereich seiner Mantelfläche in Länge und Winkellage so bemessen, dass eine mit der Fase der Durchlassöffnung korrespondierende Verpressung bzw. Anlageposition möglich ist.

Ausgehend davon, dass die Halteposition durch unterschiedliche Formbereiche vorgegeben werden kann, ist vorgesehen, dass das Sicherungselement am Ende einer Pressphase vorzugsweise auslassseitig der Durchlassöffnung überstehend unmittelbar am Werkstück festlegbar ist. Dabei hat sich die Ausbildung des Sicherungselementes in Form eines elastischen Ringes als vorteilhaft herausgestellt.

Eine weitere konstruktive Ausführung des erfindungsgemäßen Schließ-Systems sieht vor, dass das jeweilige Zinkteil im Bereich seines in Einpressrichtung vorderen Endes eine stirnseitige Zusatzprofilierung aufweisen kann. Diese Ausführung einer Zusatzprofilierung kann insbesondere dazu genutzt werden, zwei in diametraler Pressrichtung in einer einzigen Durchlassöffnung zusammengeführte Schließteile in axialer und/oder radialer Richtung miteinander zu verbinden. Dabei ist denkbar, dass zusätzlich zu einer in Pressrichtung erfolgenden linearen Schubverlagerung im Bereich der aufeinander zu bewegten Schließteile entsprechende Zusatzbewegungen zu realisieren sind. Denkbar ist dabei insbesondere eine relative Schwenkverlagerung der beiden Schließteile zueinander. Ebenso ist vorgesehen, dass im Bereich der stirnseitigen Zusatzprofilierungen durch eine Rastverbindung o. dgl. Verbinder eine zusätzliche Halterung erreicht wird.

Ein Verfahren zum Verschließen der Durchlassöffnung sieht vor, dass bereits die Durchlassöffnung im Werkstück mit einer an einen nachfolgenden Materialauftrag beim Verzinkungsvorgang anpassbaren Querschnittserweiterung hergestellt wird. Ausgehend von diesem vorbereitenden Ablauf kann dann in die - nachfolgend beim an sich bekannten Verzinkungsvorgang verengte - Durchlassöffnung das erfindungsgemäße Schließteil aus Zink oder einer Zinklegierung passgenau eingesetzt werden. Damit wird ein wesentliches Element der Verfahrensführung in eine vorbereitende Arbeitsphase zur Bereitstellung von Werkstücken für den Verzinkungsprozess verlagert. Es hat sich bezeigt, dass durch optimale Abstimmung von jeweils vorgesehenen Verfahrensparametern beim Verzinken und jeweiliger Geometrie des Verschlussteils für die anschließende Verbindungsphase eine passgenaue Press-Geometrie vorliegt, so dass damit ein langzeitig stabiler Verschluss der Durchlassöffnung herstellbar ist.

Eine vorteilhafte Ausführung dieser Phase einer Bauteilverbindung sieht vor, dass nach dem Verzinkungsvorgang des metallischen Werkstücks in den Bereich der durch eine Zinkschicht verengten Durchlassöffnung das im Wesentlichen mit zylindrischer Kontur geformte Schließteil eingepresst wird. Im Unterschied zu bisher üblichen, ungleichmäßige Umformkräfte erzeugenden "Hammerschlägen" o. dgl. Verbindungsmethoden mit wechselnden Press- und Umformkräften wird nunmehr ein im Wesentlichen kontinuierlicher Pressvorgang am Schließteil erzeugt. Dieses kann dabei unter Wirkung konstanter oder gleichmäßig steigender Druckkräfte beschädigungsfrei an der verzinkten Öffnungswandung angelegt und damit im Bereich der Durchlassöffnung unter optimaler Dichtwirkung ein Verschluss erreicht werden. Dabei wird eine berechenbare Klemmfunktion erreicht, wobei plastische Verformungen mit Rissbildung vermeidbar sind. Insbesondere sind Abplatzungen im und am feuerverzinkten Überzug des Werkstücks im Bereich des Bohrungsrandes ausgeschlossen.

Es hat sich gezeigt, dass dabei im Bereich der mit dem eingepressten Schließteil zusammenwirkenden Öffnungswandung durch die hier zumindest zwei aneinander liegenden Zinklagen eine Presszone als korrosionsgeschützte "Zwischenlage" gebildet wird. In Abhängigkeit davon, welches Verzinkungsverfahren an dem jeweiligen metallischen Werkstück eingesetzt wurde, können im Bereich dieser auch mehrschichtigen Zwischenlage variierende Zinklegierungen in optimalen Presslagen form- und kraftschlüssig verbunden werden. Dabei ist vorgesehen, dass das Schließteil - im Unterschied zu bisher verwendetem Reinzink - vorteilhaft aus einer Legierung mit beispielsweise 98 % Zink und 2 % Begleitelementen bestehen kann.

Ausgehend von dieser in den Verfahrensparametern optimierbaren Einpress-Phase wird durch den kontinuierlichen Pressvorgang erreicht, dass die verpresste Schließteil-Werkstück-Verbindung im Bereich der jeweiligen Durchlassöffnung vorteilhaft an dynamisch belastbaren Baugruppen, Bauteilen o. dgl. Konstruktionselementen eingesetzt werden kann.

Unter gestalterischen und/oder optischen Gesichtspunkten ist vorgesehen, dass das Schließteil auch bis in eine mit der Oberfläche des jeweiligen Werkstücks bündige Einbaulage in die Durchlassöffnung eingeschoben werden kann. Damit kann insbesondere im Bereich von dekorativen Gartenelementen, Pfostenteilen o. dgl. Gestaltungsbaugruppen eine geschlossene Oberfläche erzeugt werden, so dass insgesamt ansprechende Systeme mit beschichteten Bauteilen verfügbar sind.

Ausgehend von dem erfindungsgemäß vorgesehenen Einpressen des Schließteils ist die Verfahrensführung auf eine weitere Optimierung ausgerichtet. Dazu ist vorgesehen, dass das metallische Werkstück in üblicher Bearbeitungsabfolge verzinkt wird und danach in diesem Werkstück mit einem spanabhebenden Werkzeug eine Erweiterung der Durchlassöffnung durchgeführt wird. Im Bereich der Durchlassöffnung kann es dabei zu einer vollständigen Freilegung des metallischen Grundmaterials kommen.

In diese durch die spanende Bearbeitung optimal vorbearbeitete Durchlassöffnung wird nunmehr ein zumindest am Außenumfang aus einer Zinklegierung bestehendes Schließteil erfindungsgemäß eingepresst. Entsprechend der als "Bausatz" zusammenwirkenden Werkzeug-Schließteil-Einheit wird ausgehend von der Vorbereitung zwangsläufig die optimale Einpressposition erreicht. Dabei kann das Schließteil an den bearbeiteten Seitenflächen in einer korrosionsschützenden Anlagestellung positioniert werden, und durch den gleichmäßigen Einpressvorgang wird eine gezielte "Abdeckung" des freigelegten korrosionsgefährdeten Grundmaterials durch die zumindest eine Zinklage des Schließteils erreicht. Durch eine hohe Passgenauigkeit der Bohrung-Schließteil-Einheit wird ein fester Sitz erreicht, der nach ersten Tests auch dann gewährleistet ist, wenn der Zink-Abtrag bis zu 25 µm/Jahr (Korrosivitätskategorie C5) erreicht.

Für eine effiziente Verfahrensführung ist vorgesehen, dass das in Form eines Bohrwerkzeuges ausgebildete spanabhebende Werkzeug und das aus Zink oder einer Zinklegierung geformte Schließteil als ein in weiten Grenzen optimierbares Bearbeitungs-Set bereitgestellt werden. Deutlich wird dabei, dass jeweilige, an die Durchmesser der Durchlassöffnung angepasste Werkzeuge und die zugehörigen Zink-Schließteile anwendungstechnisch unterschiedlich kombiniert werden können. Die Bemessung der Einzelteile kann dabei so aufeinander abgestimmt werden, dass das Zink-Schließteil im Bereich der aufgebohrten Durchlassöffnung durch einen die aneinander reibenden Teilflächenbereiche schonend umformenden Pressvorgang fixiert wird. Diese Stützverbindung kann dabei auch unterhalb der maximalen Umformung - ggf. noch im "elastischen" Bereich der Werkstoffe - hergestellt werden, so dass die erfindungsgemäßen Press-Verschlüsse vorteilhaft für dynamisch belastbare Baugruppen geeignet sind.

Eine weitere vorteilhafte Ausgestaltung der Verfahrensführung sieht vor, dass in einer Vorbereitungsphase die Durchlassöffnung im Bereich ihres - nachfolgend beim Pressen in Pressrichtung ersten - Randbereiches mit einer Formerweiterung versehen wird. Dabei kann mittels eines als Werkzeug vorgesehenen Zentrierbohrers eine Formerweiterung in Form einer Fase erzeugt werden, so dass in diese ein komplementärer Teilbereich des entsprechend geformten Schließteils eingepresst werden kann. Damit ist die Belastbarkeit des Verbindungsaufbaus weiter verbessert.

Weitere Einzelheiten und vorteilhafte Ausgestaltungen ergeben sich aus der nachfolgenden Beschreibung und der Zeichnung, in der mehrere Ausführungsbeispiele der erfindungsgemäßen Verfahrensführung sowie der dafür vorgesehenen Schließteile aus Zinklegierungen veranschaulicht sind. In der Zeichnung zeigen:
- Fig. 1: jeweilige Darstellungen von Verfahrensschritten bei der Vorbearbeitung eines zur Verzinkung vorgesehenen Werkstücks und dessen Aufbau nach der Verzinkung in Einzeldarstellungen,
- Fig. 2: jeweilige an Fig. 1 anschließende Darstellungen von Verfahrensschritten bei der Durchführung eines kontinuierlichen Pressvorgangs an dem Schließteil,
- Fig. 3: jeweilige Darstellungen ähnlich Fig. 1 mit einer zweiten Verfahrensvariante beim Einsatz eines Bearbeitungs-Sets mit angepasstem Schließteil und einer Aufbohr-Phase nach einem Verzinkungsvorgang,
- Fig. 4: jeweilige Phasenbilder beim Einpressen des Schließteils an einem gemäß Fig. 1 vorbereiteten Werkstück,
- Fig.5: eine Ausführung eines erfindungsgemäßen Schließteils mit einem zusätzlichen Sicherungselement,
- Fig. 6: eine Gesamtdarstellung eines Werkstücks mit zwei Schließteilen im Bereich einer Durchgangsöffnung, und
- Fig. 7: eine vergrößerte Ausschnittsdarstellung der beiden axial verpressten Schließteile in dem Bauteil gemäß Fig. 6.

Bei bekannten Verfahren zur korrosionsschützenden Bearbeitung von metallischen Werkstücken ist vorgesehen, dass die jeweilige Durchlassöffnung als ein wesentliches Element zum Halten des Werkstücks in der Verzinkungsphase - bereits vor diesem Vorgang - in das Werkstück eingebracht wird. Daraus resultiert dann bei der Weiterbearbeitung die Aufgabe, nach dem Verzinken in den freien Querschnitt der Durchlassöffnung ein diese abdeckendes Schließteil einzusetzen, um beispielsweise den optischen Gesamteindruck des Werkstücks bestimmungsgemäß zu optimieren.

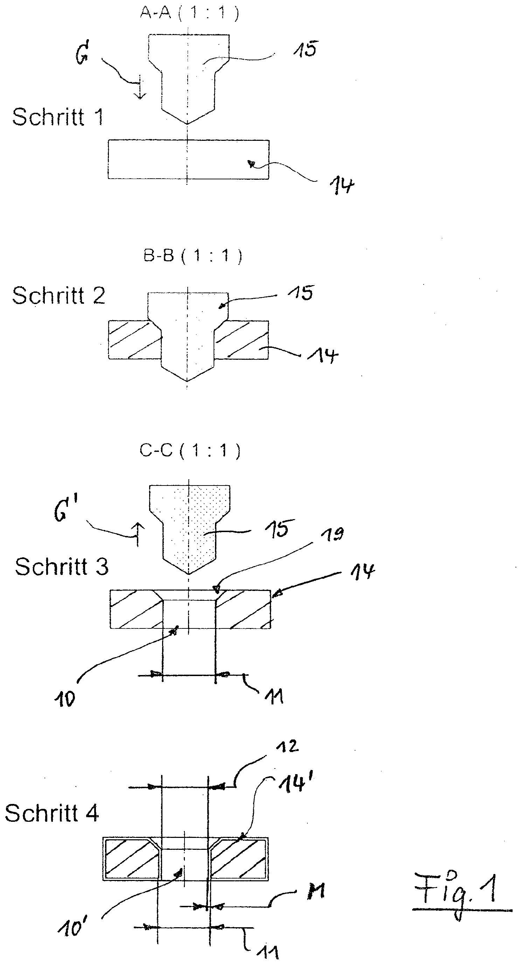

Aus der Übersichtsdarstellung gemäß Fig. 1 ist in unterschiedlichen Bearbeitungsphasen ersichtlich, wie das Verschließen einer Durchlassöffnung 10 erreicht werden kann. Aus den Schritten 1 bis 3 (Bohrrichtung G, Rückhub G') ergibt sich, dass bereits die Durchlassöffnung 10 mit einer - an einen Materialauftrag M beim Verzinkungsvorgang (Schritt 4) anpassbaren - Querschnittserweiterung 11 hergestellt wird.

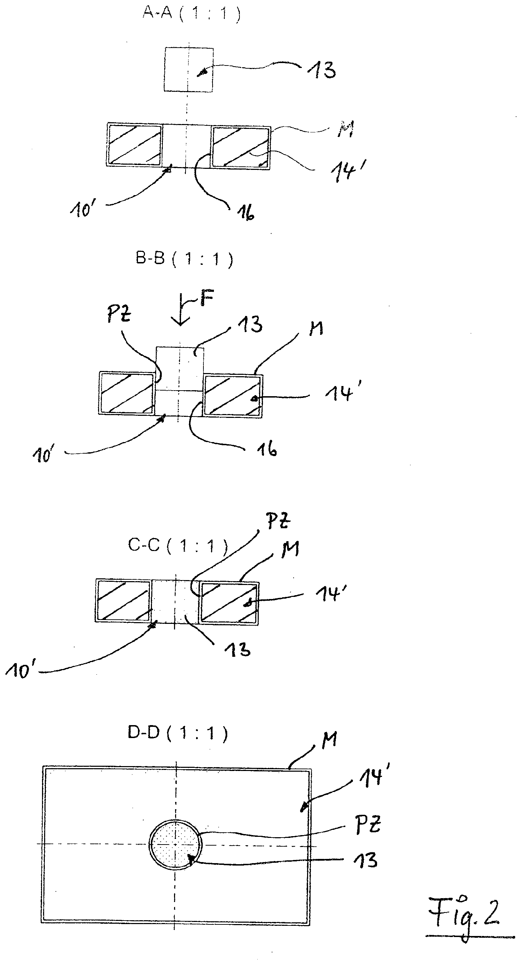

Bei dem nachfolgenden, nicht näher dargestellten Verzinkungsvorgang wird dann durch den Beschichtungsvorgang eine auf das Maß 12 verengte Durchlassöffnung 10' erzeugt (Schritt 4). Dabei sind die Verfahrensparameter dieses Verzinkungsvorgangs auf den später geplanten Verschluss der Durchlassöffnung 10' so abgestimmt, dass nachfolgend ein Schließteil 13 (Fig. 2) aus Zink oder einer Zinklegierung passgenau in diese "neue" Durchlassöffnung 11 eingesetzt werden kann. In Fig. 1 ist das zur Verzinkung vorbereitete Werkstück allgemein mit 14 bezeichnet, und mit 15 ist ein eine Bohrung erzeugendes Werkzeug allgemein dargestellt.

Aus der Zusammenschau unterschiedlicher Bewegungsphasen beim Verschließen der Durchlassöffnung 10' gemäß Fig. 2 wird deutlich, dass nach dem Verzinkungsvorgang des metallischen Werkstücks 14' das hier zylindrisch geformte Schließteil 13 in den Bereich der durch eine Zinkschicht M verengten Durchlassöffnung 10' durch einen Pressvorgang (Pfeil F) eingebracht wird. Dabei ist ein im wesentlichen kontinuierlicher Pressvorgang am Schließteil 13 wirksam, so dass dieses beschädigungsfrei zumindest bereichsweise an der verzinkten Öffnungswandung 16 im Bereich M angelegt werden kann.

Ausgehend von einer optimalen Ausbildung des Schließteils 13 aus Zink oder einer Zinklegierung wird erreicht, dass im Bereich der mit dem eingepressten Schließteil 13 zusammenwirkenden Öffnungswandung 16 durch zumindest zwei aneinanderlegbare Zinklagen eine insgesamt korrosionsschützende Presszone PZ (Fig. 2) aufgebaut wird. Ausgehend davon, dass an dem metallischen Werkstück 14 unterschiedliche Verzinkungsverfahren eingesetzt werden können, ergibt sich, dass im Bereich der Öffnungswandung 16 bzw. des Materials M variierende Zinklegierungen zusammenwirken können und diese einen jeweils optimalen Korrosionsschutz bewirken.

Durch umfängliche Tests der vorbeschriebenen Schließteil-Werkstück-Verbindung mit Verpressung F wurde festgestellt, dass dieses Verbindungskonzept vorteilhaft im Bereich von Durchlassöffnungen 10 an dynamisch belastbaren Baugruppen eingesetzt werden kann. Damit eröffnen sich für den praktischen Einsatz vielfältige Möglichkeiten, da an beschichteten Werkstücken 14 mit stoß- und/oder schlagartigen Belastungsparametern der Einsatz von Schließteilen 13 bisher als problematisch eingeschätzt wurde. Unter gestalterischen Gesichtspunkten hat es sich gezeigt, dass durch den erfindungsgemäßen Pressvorgang F das Schließteil 13 vorteilhaft auch bis in eine mit der Oberfläche des Werkstücks 14 bündige Einbaulage (Fig. 2) in die Durchlassöffnung 10' eingeschoben werden kann. Es hat sich gezeigt, dass die verpressten Schließteile 13 insbesondere auch bei Werkstücken mit Belastungen durch Vibration, Torsion oder Temperaturwechsel eine erhöhte Sicherheit in der Lagefixierung aufweisen.

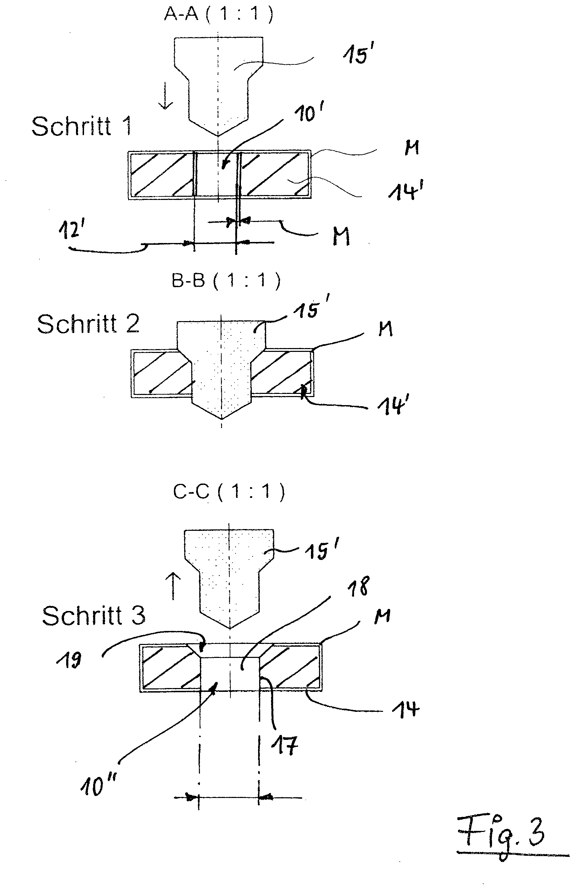

In Fig. 3 ist eine zweite Verfahrensvariante bei der Bearbeitung eines bereits verzinkten Werkstücks 14' dargestellt, wobei in dieses Werkstück 14' (Schritt 1 und 2) mit einem spanabhebenden Werkzeug 15' unter wandungsseitiger Freilegung des metallischen Grundmaterials 17 eine Erweiterung der Durchlassöffnung 10' durchgeführt wird. An dieser bearbeiteten Durchlassöffnung 10" wird dann das zumindest am Außenumfang aus einer Zinklegierung bestehende Schließteil 13 angelegt und (ähnlich Fig. 2) eingepresst. Damit wird erreicht, dass das Schließteil 13 an der spanend bearbeiteten Seitenfläche 18 in einer korrosionsschützenden Anlagestellung positioniert wird. Die vorgesehene langzeitstabile Fixierung kann dabei durch entsprechende elastische Umformung der aneinander liegenden korrespondierenden Materialien von Schließteil-Oberfläche und Seitenfläche 18 erreicht werden.

Ausgehend von diesem optimierbaren Schneid-Press-System ist vorgesehen, dass das in Form eines Bohrwerkzeuges ausgebildete spanabhebende Werkzeug 15' und das aus Zink oder einer Zinklegierung bestehende Schließteil 13 so kombiniert werden, dass ein für weitgehend beliebige Anwendungsfälle einsetzbares Bearbeitungs-Set bereitgestellt wird.

Ausgehend davon, dass bei der industriellen Durchführung von Verzinkungsvorgängen weitgehend gleiche Durchlassöffnungen, beispielsweise im Bereich von 5 mm bis 20 mm, vorzugsweise 10 mm, verwendet werden, kann mit einem entsprechend groß bemessenen Bohrwerkzeug 15', beispielsweise mit einem Durchmesser von 22 mm, ein großer Bereich abgedeckt werden. Dabei kann zwar die Durchlassöffnung 10" entsprechend der Ausgangsgröße eine wesentliche Erweiterung im Durchmesser erfahren, aber gleichzeitig wird das für das Bearbeitungs-Set vorbereitete Zink-Schließteil 13 optimal an diese Erweiterung angepasst, so dass der nachfolgende Verschluss die langzeitstabile Abdeckung der Werkstückoberfläche bewirkt. Dabei versteht es sich, dass das Zink-Schließteil 13 im Bereich der aufgebohrten Durchlassöffnung 10" durch den erfindungsgemäß vorgesehenen Pressvorgang fixiert wird.

Bei den Ausführungen gemäß Fig. 1 und Fig. 3 ist die jeweilige Durchlassöffnung 10, 10', 10" im Bereich ihres in Pressrichtung ersten Randbereiches mit einer Formerweiterung 19 versehen. Ersichtlich wird dabei mittels eines als Werkzeug 15' verwendeten Zentrierbohrers eine Fase erzeugt, und in diese kann dann ein komplementärer Teilbereich 20 des Schließteils 13 eingepresst werden (Fig. 1, Fig. 3, Fig. 5). Denkbar ist auch, dass das Schließteil 13 mit variierenden Kopfteilen, beispielsweise einem über die Werkstückoberfläche vorstehenden Linsenkopf, geformt wird (nicht dargestellt).

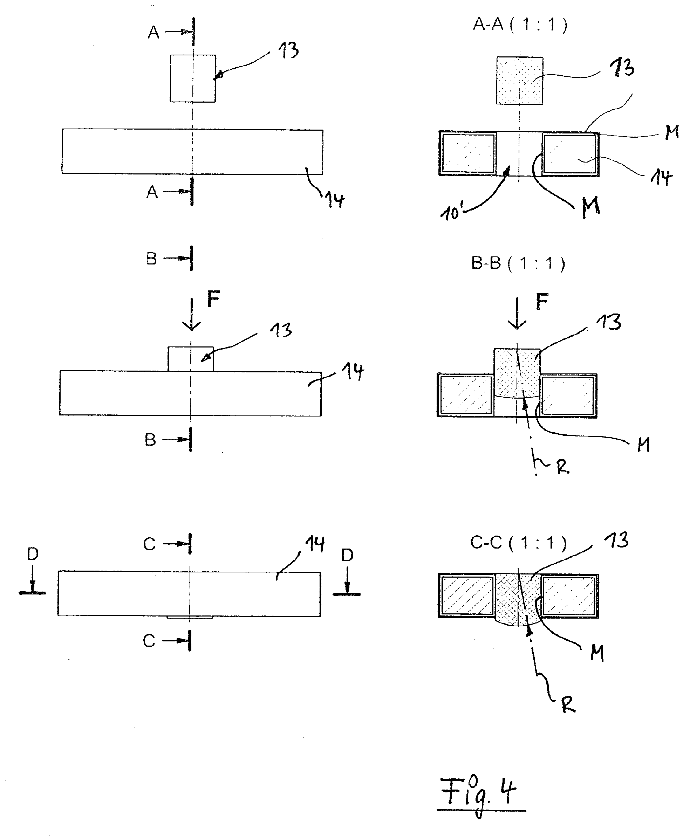

Aus den einzelnen Verbindungsphasen gemäß Fig. 4 wird der Einpressvorgang des im Wesentlichen zylindrischen Schließteils 13 unter Wirkung der Presskraft F deutlich (ähnlich Fig. 2). Ausgehend vom Schritt 1 ist in Schritt 2 und 3 dabei ein - unter Wirkung der Presskraft F - denkbarer Umformvorgang im Bereich der Schließteil-Werkstück-Paarung dargestellt, wobei das Schließteil 13 an seinem vorderen Ende mit einem Wölbungsradius R versehen ist. Ein wesentliches Ziel bei diesem Verbindungsaufbau besteht darin, dass die innere Materiallage M bei dem dargestellten Schließvorgang mit der "Schub-Phase" F unbeschädigt bleibt. Damit kann die korrosionsgeschützte Verschlusslage gemäß Abbildung Schritt 3 in Fig. 4 insbesondere auch dann gewährleistet werden, wenn ein zur Oberfläche des Werkstücks 14 gleichebeniger Abschluss gebildet wird.

In jedem Fall ist vorgesehen, dass das mit variierbaren Durchmessern formbare und für das Bearbeitungs-Set vorgesehene Zink-Schließteil 13 wahlweise in eine mit einer verzinkten Decklage versehene Durchlassöffnung 10' einpressbar ist (Fig. 1, Fig. 4) oder auch in ein durch Nachbearbeitung das freigelegte Grundmaterial aufweisende Durchlassöffnung 10" (Fig. 3) aufweisendes System integriert werden kann.

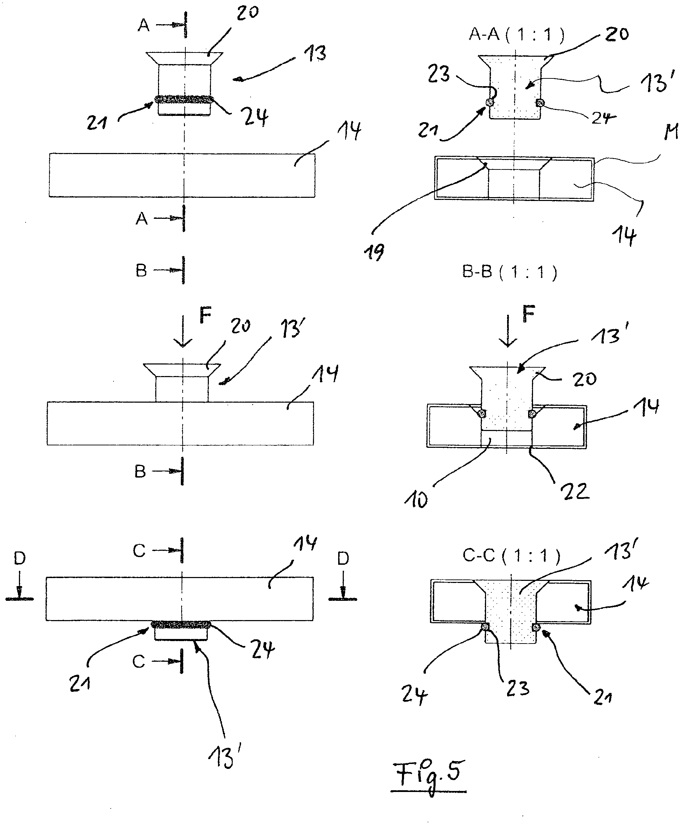

Die erfindungsgemäße Ausführungsform des Zink-Schließteils 13' sieht vor, dass dieses wandungsseitig mit einem zusätzlichen Sicherungselement 21 versehen wird (Fig. 5). Dieses Sicherungselement 21 kann dabei so ausgeführt werden, dass es mit der Durchlassöffnung 10 und/oder dem unteren Randbereich 22 zusammenwirkt.

Aus der Darstellung in Fig. 5 wird deutlich, dass das Sicherungselement 21 als ein am Ende des Einpressvorgangs zwangsgeführt in die Halteposition verlagerbares Zusatzteil vorgesehen ist. Dabei ist vorgesehen, dass das Sicherungselement 21 am Ende einer Pressphase (Fig. 5, Darstellung C) auslassseitig der Durchlassöffnung 10 überstehend am Werkstück 14 festgelegt wird. In zweckmäßiger Ausführung ist das Sicherungselement 21 als ein in einer Nut 23 o. dgl. Profilierung des Zink-Schließteils 13' festlegbarer elastischer Ring 24 ausgebildet.

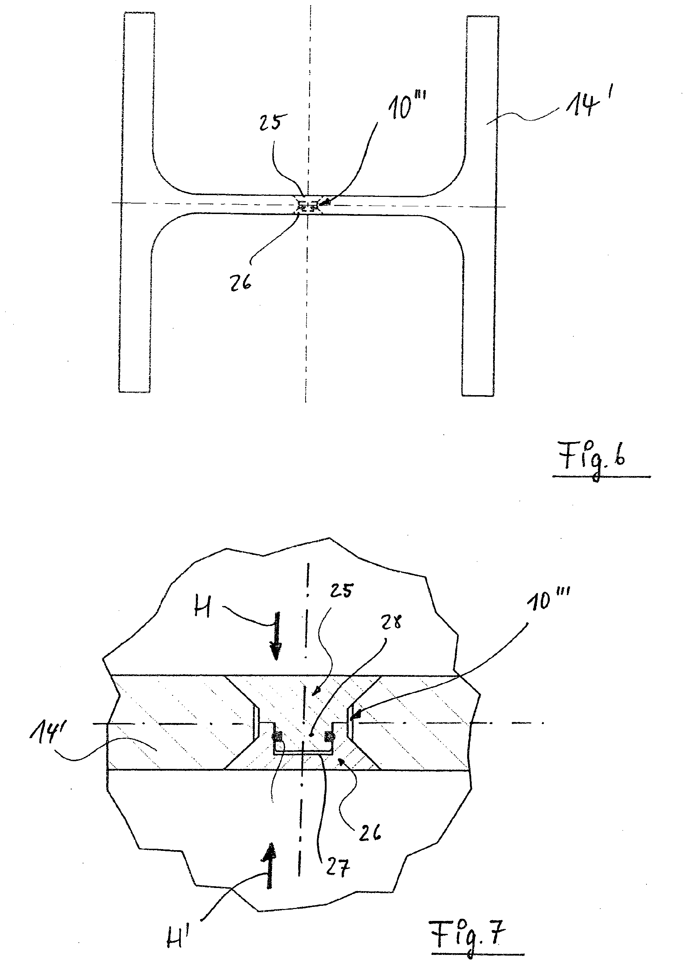

Eine weitere Ausführung der Press-Schließteil-Kombination sieht vor, dass im Bereich einer in Fig. 6 und Fig. 7 dargestellten Durchlassöffnung 10'" zwei Zinkteile 25 und 26 zusammenwirken. Dabei sind die Zinkteile 25, 26 im Bereich ihrer jeweils in Einpressrichtung H, H' vorderen Enden mit einer jeweiligen stirnseitigen Profilierung versehen. Mittels deren komplementärer Ausbildung ist eine Verbindung herstellbar.

Denkbar ist dabei, dass die beiden Schließteile 25, 26 gemäß dem erfindungsgemäßen Verfahren wandungsseitig im Bereich der Durchlassöffnung 10'" verpressbar sind (nicht dargestellt).

Aus der vergrößerten Einzeldarstellung in Fig. 7 wird deutlich, dass die zwei in diametraler Zuführrichtung H, H' in der Durchlassöffnung 10'" zusammengeführten Schließteile 25, 26 axial und/oder radial verbunden werden können. Für die axiale Verbindung der beiden Teile 25, 26 wirken jeweilige, als Nut-Feder-Profilierung geformte Ansätze 27, 28 zusammen. Dabei ist als zusätzliche radiale Abstützung ein innen liegendes Ringelement, beispielsweise ein elastischer Sicherungsring, vorgesehen.

Die vorbeschriebene Verfahrensführung und die Ausbildung des jeweiligen Schließteils in variierbaren Varianten sind auf die bevorzugte Kombination von verzinkten Bauteiloberflächen und Zinkteilen gerichtet. Denkbar ist auch, die erfindungsgemäße Lehre auf Bauteile zu übertragen, die beispielsweise eine mittels Tauchlackierung hergestellte Beschichtung aufweisen.

## Patentansprüche

1. Schließteil aus Zink oder einer Zinklegierung zum Einsetzen in eine Durchlassöffnung eines metallischen Werkstücks (14, 14'), das eine insbesondere durch einen Verzinkungsvorgang korrosionsgeschützte Oberfläche aufweist, wobei das Schließteil (13) als ein im Wesentlichen zylindrischer und einen zumindest bereichsweise mit der Durchlassöffnung (10, 10', 10", 10'") korrespondierenden Durchmesser aufweisender Körper geformt ist, derart, dass dieses Zink-Schließteil (13) wahlweise kraft- und/oder formschlüssig in die Durchlassöffnung (10, 10', 10", 10'") einsetzbar ist, **dadurch gekennzeichnet, dass** das wandungsseitig zumindest bereichsweise an der Mantelfläche (16) der Durchlassöffnung (10) anlegbare Zink-Schließteil (13) ein dieses in der Einbaulage haltendes Sicherungselement (21) aufweist, welches am Ende eines Einpressvorgangs (F) zwangsgeführt in eine Halteposition verlagerbar ist.

2. Schließteil nach Anspruch 1, **dadurch gekennzeichnet, dass** das mit variierbaren Durchmessern formbare Zink-Schließteil (13) wahlweise in eine mit einer verzinkten Decklage (M) versehene oder in einer durch Nachbearbeitung das freigelegte Grundmaterial (17) aufweisende Durchlassöffnung (10, 10', 10") einpressbar ist.

3. Schließteil nach Anspruch 1 oder 2, **dadurch gekennzeichnet, dass** das Zink-Schließteil (13) mit seiner zylindrischen Mantelfläche zumindest bereichsweise an einer durch die Nachbearbeitung von der verzinkten Decklage (M) freien Wandung (17) der Durchlassöffnung (10") anlegbar ist.

4. Schließteil nach einem der Ansprüche 1 bis 3, **dadurch gekennzeichnet, dass** das Schließteil (13) ausgehend vom zylindrischen Basiskörper mit einem Kopfteil (20) versehen ist, derart, dass dieser über den Durchmesser der Durchlassöffnung (10, 10', 10", 10"') überstehend bemessen ist.

5. Schließteil nach Anspruch 4, **dadurch gekennzeichnet, dass** der Kopfteil (20) in Form eines mit dem Basiskörper einstückigen Kegelstumpfes geformt ist, derart, dass dessen Mantelfläche in Länge und Winkellage mit der Fase der Durchlassöffnung (10) korrespondierend verpressbar ist.

6. Schließteil nach einem der Ansprüche 1 bis 5, **dadurch gekennzeichnet, dass** das Sicherungselement (21) am Ende einer Pressphase auslassseitig der Durchlassöffnung (10) überstehend am Werkstück (14) festlegbar ist.

7. Schließteil nach einem der Ansprüche 1 bis 6, **dadurch gekennzeichnet, dass** als Sicherungselement (21) ein elastischer Ring (24) vorgesehen ist.

8. Schließteil nach einem der Ansprüche 1 bis 7, **dadurch gekennzeichnet, dass** das Schließteil (13) im Bereich seines in Einpressrichtung vorderen Endes eine stirnseitige Profilierung aufweist, derart, dass zwei in diametraler Pressrichtung (H, H') in einer Durchlassöffnung (10'") zusammengeführte Schließteile (25, 26) axial und/oder radial verbindbar sind.

9. Verfahren zum korrosionsgeschützten Verschließen einer in einem metallischen Werkstück (14) vorgesehenen Durchlassöffnung (10), wobei diese vor einem Verzinkungsvorgang in ein Werkstück (14) eingebracht wurde, **dadurch gekennzeichnet, dass** nach dem Verzinken in den freien Querschnitt der Durchlassöffnung (10) ein diese abdeckendes Schließteil (13) nach einem der Ansprüche 1 bis 8 eingesetzt wird.

10. Verfahren zum Verschließen einer Durchlassöffnung nach Anspruch 9, **dadurch gekennzeichnet, dass** die Durchlassöffnung (10) mit einer an einen Materialauftrag (M) beim Verzinkungsvorgang angepassten Querschnittserweiterung (11) hergestellt und danach in die beim Verzinkungsvorgang verengte (Maß 12) Durchlassöffnung (10') das Schließteil (13) passgenau eingesetzt wird.

11. Verfahren nach Anspruch 10, **dadurch gekennzeichnet, dass** nach dem Verzinkungsvorgang des metallischen Werkstücks (14') in den Bereich der durch eine Zinkschicht (M) verengten Durchlassöffnung (10') das zylindrisch geformte Schließteil (13) eingepresst wird, dabei ein im Wesentlichen kontinuierlicher Pressvorgang (F) am Schließteil (13, 13') wirkt und dieses beschädigungsfrei zumindest bereichsweise an der verzinkten Öffnungswandung (16) angelegt wird.

12. Verfahren nach Anspruch 10 oder 11, **dadurch gekennzeichnet, dass** im Bereich der mit dem eingepressten Schließteil (13, 13') zusammenwirkenden Öffnungswandung (16) durch zumindest zwei aneinander liegende Zinklagen eine korrosionsgeschützte Presszone gebildet wird, derart, dass als Folge des jeweils am metallischen Werkstück (14) eingesetzten Verzinkungsverfahrens jeweilige Presslagen mit variierenden Zinklegierungen verpresst werden.

13. Verfahren nach Anspruch 9, **dadurch gekennzeichnet, dass** das metallische Werkstück (14, 14') verzinkt, danach in diesem mit einem spanabhebenden Werkzeug (15) unter wandungsseitiger Freilegung des metallischen Grundmaterials (17) eine Erweiterung der Durchlassöffnung (10') durchgeführt und in diese bearbeitete Durchlassöffnung (10') ein zumindest am Außenumfang aus einer Zinklegierung bestehendes Schließteil (13) eingepasst wird, derart, dass das Schließteil (13) an den bearbeiteten Seitenflächen (17) in einer korrosionsschützenden Anlagestellung positioniert wird.

14. Verfahren nach Anspruch 13, **dadurch gekennzeichnet, dass** das in Form eines Bohrwerkzeuges ausgebildete spanabhebende Werkzeug (15) und das aus Zink oder einer Zinklegierung geformte Schließteil (13) als ein Bearbeitungs-Set bereitgestellt werden, derart, dass jeweilige an die Durchmesser der Durchlassöffnung (10) angepasste Werkzeuge (15) und zugehörige Zink-Schließteile (13) kombiniert verwendet werden.

15. Verfahren nach Anspruch 13 oder 14, **dadurch gekennzeichnet, dass** das Zink-Schließteil (13) im Bereich der aufgebohrten Durchlassöffnung (10") durch einen Pressvorgang fixiert wird.

16. Verfahren nach einem der Ansprüche 13 bis 15, **dadurch gekennzeichnet, dass** die Durchlassöffnung (10) im Bereich ihres in Pressrichtung (F) hinteren Randbereiches mit einer Formerweiterung (19) versehen wird, derart, dass mittels eines als Werkzeug (15) verwendeten Zentrierbohrers eine Fase erzeugt und in diese ein komplementärer Teilbereich (20) des Schließteils (13) eingepresst wird.

17. Verfahren nach einem der Ansprüche 9 bis 16, **dadurch gekennzeichnet, dass** die verpresste Schließteil-Werkstück-Verbindung im Bereich von Durchlassöffnungen (10, 10', 10", 10"') an dynamisch belastbaren Baugruppen (14, 14') eingesetzt wird.

18. Verfahren nach einem der Ansprüche 9 bis 17, **dadurch gekennzeichnet, dass** das Schließteil (13) bis in eine mit der Oberfläche des Werkstücks (14) bündige Einbaulage in die Durchlassöffnung (10) eingeschoben wird.

## Claims

1. Closing part made of zinc or a zinc alloy, for inserting into a through-opening of a metal workpiece (14, 14') which has a surface that is protected against corrosion in particular by a galvanizing process, the closing part (13) being formed as a substantially cylindrical body having a diameter which corresponds, at least in regions, to the through-opening (10, 10', 10", 10"'), such that said zinc closing part (13) can optionally be inserted into the through-opening (10, 10', 10", 10"') in a force-fitting and/or formfitting manner, **characterised in that** the zinc closing part (13) which can be applied at least in regions to the lateral surface (16) of the through-opening (10) on the wall side has a securing element (21) which holds said closing part in the installed position and which can be moved into a holding position in a forcibly guided manner at the end of a pressing-in process (F).

2. Closing part according to claim 1, **characterised in that** the zinc closing part (13) which can be formed having variable diameters can optionally be pressed into a through-opening which is provided with a galvanized cover layer (M) or into a through-opening (10, 10', 10") which has the exposed base material (17) as a result of finishing.

3. Closing part according to either claim 1 or claim 2, **characterised in that** the zinc closing part (13), together with its cylindrical lateral surface, can be applied at least in regions to a wall (17) of the through-opening (10") that is free from the galvanized cover layer (M) as a result of the finishing.

4. Closing part according to any of claims 1 to 3, **characterised in that** the closing part (13), starting from the cylindrical base body, is provided with a head part (20), such that said head part is dimensioned so as to project beyond the diameter of the through-opening (10, 10', 10", 10"').

5. Closing part according to claim 4, **characterised in that** the head part (20) is formed in the shape of a truncated cone which is integral with the base body, such that the lateral surface thereof can be pressed in a manner that corresponds with the chamfer of the through-opening (10) in length and angular position.

6. Closing part according to any of claims 1 to 5, **characterised in that**, at the end of a pressing phase, the securing element (21) can be fixed on the workpiece (14) so as to project beyond the through-opening (10) on the outlet side.

7. Closing part according to any of claims 1 to 6, **characterised in that** a resilient ring (24) is provided as a securing element (21).

8. Closing part according to any of claims 1 to 7, **characterised in that** the closing part (13) has an end-face profiling in the region of the front end thereof in the pressing-in direction, such that two closing parts (25, 26) which are brought together in a diametral pressing direction (H, H') in a through-opening (10"') can be axially and/or radially connected.

9. Method for closing, in a manner which is protected against corrosion, a through-opening (10) which is provided in a metal workpiece (14), which opening was formed in a workpiece (14) before a galvanizing process, **characterised in that** a closing part (13) according to any of claims 1 to 8 that covers said opening is inserted into the free cross section of the passage opening (10) after the galvanizing.

10. Method for closing a through-opening according to claim 9, **characterised in that** the through-opening (10) is produced having a cross-sectional broadening (11) which is adapted to a material application (M) during the galvanizing process, and then the closing part (13) is inserted in an accurately fitting manner into the through-opening (10') which is narrowed (measure 12) during the galvanizing process.

11. Method according to claim 10, **characterised in that**, after the galvanizing process of the metal workpiece (14'), the cylindrically shaped closing part (13) is pressed in the region of the through-opening (10') which is narrowed by a zinc layer (M), in this case a substantially continuous pressing process (F) acts on the closing part (13, 13'), and said closing part is applied to the galvanized opening wall (16), at least in regions, in a damage free manner.

12. Method according to either claim 10 or claim 11, **characterised in that**, in the region of the opening wall (16) which cooperates with the pressed-in closing part (13, 13'), a pressing zone which is protected against corrosion is formed by at least two zinc layers lying one on top of the other, such that respective pressing layers which have varying zinc alloys are pressed as a result of each galvanizing method used on the metal workpiece (14).

13. Method according to claim 9, **characterised in that** the metal workpiece (14, 14') is galvanized, the through-opening (10') is then broadened in said workpiece using a cutting tool (15), exposing the metal base material (17) on the wall side, and a closing part (13) which consists of a zinc alloy at least on the outer circumference is fitted in this machined through-opening (10') such that the closing part (13) is positioned on the machined lateral surfaces (17) in a contact position which protects against corrosion.

14. Method according to claim 13, **characterised in that** the cutting tool (15), which is designed in the form of a drilling tool, and the closure member (13), which is formed of zinc or a zinc alloy, are provided as a machining set, such that respective tools (15) which are adapted to the diameters of the through-opening (10) can be used in combination with associated zinc closing parts (13).

15. Method according to either claim 13 or claim 14, **characterised in that** the zinc closing part (13) is fixed in the region of the drilled through-opening (10") by a pressing process.

16. Method according to any of claims 13 to 15, **characterised in that** the through-opening (10) is provided with a shape broadening (19) in the region of the rear edge region thereof in the pressing direction (F), such that a chamfer is generated by means of a centre drill which is used as a tool (15), and a complementary portion (20) of the closing part (13) is pressed into said chamfer.

17. Method according to any of claims 9 to 16, **characterised in that** the pressed connection of the closing part and the workpiece in the region of through-openings (10, 10', 10", 10'") is used in dynamically loadable assemblies (14, 14').

18. Method according to any of claims 9 to 17, **characterised in that** the closing part (13) is pushed into the through-opening (10) until it is in an installed position which is flush with the surface of the workpiece (14).

## Revendications

1. Elément de fermeture en zinc ou en un alliage de zinc pour une insertion dans une ouverture traversante d'une pièce métallique (14, 14') qui présente une surface protégée contre la corrosion en particulier par un processus de zingage, dans lequel l'élément de fermeture (13) est formé comme un corps sensiblement cylindrique et présentant un diamètre correspondant au moins par endroit à l'ouverture traversante (10, 10', 10'', 10''') de telle sorte que cet élément de fermeture en zinc (13) peut être inséré au choix par force ou coopération de forme dans l'ouverture traversante (10, 10', 10'', 10'''), **caractérisé en ce que** l'élément de fermeture en zinc (13) pouvant être placé du côté de la paroi au moins par endroit au niveau de la surface de revêtement (16) de l'ouverture traversante (10) présente un élément de sécurité (21) retenant celui-ci dans la position de montage, lequel élément peut être déplacé à guidage forcé à la fin d'un processus d'enfoncement (F) dans une position de retenue.

2. Elément de fermeture selon la revendication 1, **caractérisé en ce que** l'élément de fermeture en zinc (13) pouvant être formé avec des diamètres variables peut être enfoncé au choix dans une ouverture traversante (10, 10', 10'') dotée d'une couverture zinguée (M) ou présentant le matériau de base (17) exposé par un traitement ultérieur.

3. Elément de fermeture selon la revendication 1 ou 2, **caractérisé en ce que** l'élément de fermeture en zinc (13) avec sa surface de revêtement cylindrique peut être placé au moins par endroit au niveau d'une paroi (17) de l'ouverture traversante (10'') dépourvue de la couverture zinguée (M) par le traitement ultérieur.

4. Elément de fermeture selon l'une quelconque des revendications 1 à 3, **caractérisé en ce que** l'élément de fermeture (13) à partir du corps de base cylindrique est doté d'une partie de tête (20) de telle sorte que celle-ci soit dimensionnée de façon à dépasser au-dessus du diamètre de l'ouverture traversante (10, 10', 10'', 10''').

5. Elément de fermeture selon la revendication 4, **caractérisé en ce que** la partie de tête (20) est formée sous la forme d'un cône tronqué d'un seul tenant avec le corps de base, de telle sorte que sa surface de revêtement puisse être compressée en longueur et en position angulaire de façon à correspondre au chanfrein de l'ouverture traversante (10).

6. Elément de fermeture selon l'une quelconque des revendications 1 à 5, **caractérisé en ce que** l'élément de sécurité (21) peut être déplacé à la fin d'une phase de pressage du côté de sortie de l'ouverture traversante (10) de façon à dépasser au niveau de la pièce (14).

7. Elément de fermeture selon l'une quelconque des revendications 1 à 6, **caractérisé en ce qu'**un anneau élastique (24) est prévu comme élément de sécurité (21).

8. Elément de fermeture selon l'une quelconque des revendications 1 à 7, **caractérisé en ce que** l'élément de fermeture (13) présente dans la région de son extrémité avant dans la direction d'enfoncement, un profilage du côté frontal de telle sorte que deux éléments de fermeture (25, 26) dans une direction de pressage diamétralement opposée (H, H') joints dans une ouverture traversante (10''') puissent être reliés au niveau axial et/ou radial.

9. Procédé de fermeture protégée contre la corrosion d'une ouverture traversante (10) prévue dans une pièce métallique (14), dans lequel celle-ci a été introduite avant un processus de zingage dans une pièce (14), **caractérisé en ce que**, après le zingage dans la section libre de l'ouverture traversante (10), un élément de fermeture (13) couvrant celle-ci est inséré selon l'une quelconque des revendications 1 à 8.

10. Procédé de fermeture d'une ouverture traversante selon la revendication 9, **caractérisé en ce que** l'ouverture traversante (10) est produite avec un élargissement de section (11) adapté à une application de matériau (M) lors du processus de zingage et ensuite l'élément de fermeture (13) est inséré de façon parfaitement ajustée dans l'ouverture traversante (10') rétrécie (mesure 12) lors du processus de zingage.

11. Procédé selon la revendication 10, **caractérisé en ce qu'**après le processus de zingage de la pièce métallique (14') dans la région de l'ouverture traversante (10') rétrécie par une couche de zinc (M), l'élément de fermeture (13) de forme cylindrique est enfoncé, ce faisant, un processus de pression sensiblement continu (F) agit au niveau de l'élément de fermeture (13, 13') et celui-ci est placé sans dommage au moins par endroit au niveau de la paroi d'ouverture (16) zinguée.

12. Procédé selon la revendication 10 ou 11, **caractérisé en ce que** dans la région de la paroi d'ouverture (16) coopérant avec l'élément de fermeture enfoncé (13, 13'), une zone de pressage protégée contre la corrosion est formée par au moins deux dépôts de zinc adjacents, de telle sorte qu'en conséquence de l'utilisation du procédé de zingage respectivement au niveau de la pièce métallique (14), des sites de pressage respectifs sont comprimés avec des alliages de zinc variables.

13. Procédé selon la revendication 9, **caractérisé en ce que** la pièce métallique (14, 14') est zinguée, ensuite un élargissement de l'ouverture traversante (10') est réalisé dans celle-ci avec un outil (15) d'enlèvement de copeaux en exposant le matériau de base métallique (17) du côté de la paroi et dans cette ouverture traversante usinée (10'), un élément de fermeture (13) consistant, sur le pourtour extérieur, en un alliage de zinc est ajusté de telle sorte que l'élément de fermeture (13) soit positionné au niveau des surfaces latérales usinées (17) dans une position d'appui protégeant contre la corrosion.

14. Procédé selon la revendication 13, **caractérisé en ce que** l'outil (15) d'enlèvement de copeaux conçu sous la forme d'un outil d'alésage et l'élément de fermeture (13) formé en zinc ou en alliage de zinc sont mis à disposition sous la forme d'un ensemble d'usinage de telle sorte que des outils (15) adaptés respectivement au diamètre de l'ouverture traversante (10) et des éléments de fermeture en zinc (13) correspondants soient employés de façon combinée.

15. Procédé selon la revendication 13 ou 14, **caractérisé en ce que** l'élément de fermeture en zinc (13) est fixé par un processus de pressage dans la région de l'ouverture traversante (10'') alésée.

16. Procédé selon l'une quelconque des revendications 13 à 15, **caractérisé en ce que** l'ouverture traversante (10) est dotée, dans la région de sa région périphérique arrière dans une direction de pressage (F), d'un élargissement de forme (19) de telle sorte qu'au moyen d'un foret de centrage employé comme outil (15), un chanfrein est produit et dans celui-ci, une région partielle complémentaire (20) de l'élément de fermeture (13) est enfoncée.

17. Procédé selon l'une quelconque des revendications 9 à 16, **caractérisé en ce que** la liaison élément de fermeture-pièce comprimée est insérée dans la région d'ouvertures traversantes (10, 10', 10'', 10''') au niveau d'assemblages (14, 14') pouvant être contraints dynamiquement.

18. Procédé selon l'une quelconque des revendications 9 à 17, **caractérisé en ce que** l'élément de fermeture (13) est poussé dans l'ouverture traversante (10) jusque dans une position de montage affleurant la surface de la pièce (14).
